# EUROPEAN PATENT APPLICATION

(11) **EP 3 766 855 A1**
(43) Date of publication of application: **20.01.2021**
(21) Application number: 19186943.7
(22) Date of filing: 18.07.2019
(51) Int. Cl.: C04B 26/06, C04B 28/06, C04B 28/14, C04B 40/06, C04B 111/28, C04B 103/20

(54) **KIT FOR PREPARING A RENDER COMPOSITION**

(71) Applicant: SAINT-GOBAIN WEBER, 77170 Servon (FR)
(72) Inventor: NOSBÜSCH, Günter Bernhard, 79879 Wutach (DE); RIBEIRO DE SOUSA FERREIRA, Pedro Miguel, 4520-605 São João de Ver (PT); DOMINGUEZ COSTA, Eduardo, 3030-489 Coimbra (PT)
(74) Representative: Saint-Gobain Recherche

(57) **Abstract**

A kit for preparing a render composition able to be coated on a building substrate, especially a building substrate which is part of an External Thermal Insulation Composite System, said kit comprising:
- a powder component comprising Portland cement, calcium aluminate cement and a source of sulfate, and
- a pasty component comprising an aqueous polymeric dispersion and mineral aggregates.

## Description

The present invention relates to rendering compositions based on polymers. Rendering compositions are used to coat building substrates, especially masonry walls, and may be part of façade systems such as ETICS (External Thermal Insulation Composite System). Renders have both technical and esthetical purposes: applied as a coating on the walls, they protect them against the environment, especially by preventing rain penetration, and they enhance the appearance of the building by providing certain colors and/or textures.

Some renders are based on cementitious compositions, called mortars, usually dry mixtures of hydraulic binders (such as Portland cement), aggregates and additives. By mixing with water, a pasty composition is obtained, that can be applied on the building substrate before setting and hardening.

Other renders, which are concerned by the present specification, are based on polymers. Sometimes called "wet renders", they comprise an aqueous polymeric dispersion and mineral aggregates, as well as some additives. These compositions are already liquid or pasty and can thus be applied directly to the building substrates to be coated, without any previous mixing with water.

Wet renders are especially appreciated for ETICS, and provide protection against rain, freeze-thaw, UV radiation and mechanical damages.

Wet renders however often dry very slowly under cold and humid conditions, for example during the fall and the winter.

Some additives, whether in powder or liquid form, may be added to the composition in order to accelerate the drying. DE 198 52 874 discloses for example an additive comprising an aqueous solution of an ammonium salt such as zinc ammonium acetate. However, these solutions often have shown drawbacks. By forming very quickly a waterproof skin on the surface of the render, the water contained in the bulk of the coating is prevented from evaporating. The bulk thus remains soft for a long period of time, which can cause some parts of the building substrate to soften and/or create blisters under the influence of the sun radiation. For example, within an ETICS, basecoats or levelers based on waterborne polymers may be softened. In some cases, the additives are already contained in the composition and can reduce its shelf life or limit the temperature ranges at which the composition can be used. Some additives or the wet render composition itself may also contain ammonia in order to stabilize the formulation and avoid any premature drying in the pail. Ammonia acts indeed as a blocking agent for the reactive groups in the polymer chains. The drying process, driven by the evaporation of ammonia, starts from the surface, building a protective skin on the surface of the render. High ammonia concentrations may however cause deleterious effects on the health of the exposed humans.

The aim of the invention is to remedy these disadvantages by providing a render composition that can be used in a wide spectrum of conditions, and especially that can dry quickly, even under cold and humid conditions, within the whole bulk of the coating. Other properties which are needed are a stability of the colored appearance, and a high durability.

These objectives are achieved by means of a kit for preparing a render composition able to be coated on a building substrate, especially a building substrate which is part of an External Thermal Insulation Composite System, said kit comprising:
- a powder component comprising Portland cement, calcium aluminate cement and a source of sulfate, and
- a pasty component comprising an aqueous polymeric dispersion and mineral aggregates.

Another object of the invention is a pulverulent dry mixture comprising Portland cement, calcium aluminate cement and a source of gypsum, in a total amount of 90wt% or more.

Still another object of the invention is the use of a pulverulent dry mixture comprising at least 90wt% of a mixture of hydraulic binders comprising Portland cement, calcium aluminate cement and a source of sulfate, to accelerate the hardening of a polymeric render.

Still another object of the invention is a method to coat a building substrate comprising mixing the powder component and the pasty component of the kit according to the invention, and applying the obtained mixture on the surface of said building substrate.

Still another object of the invention is an ETICS comprising a render obtained by the method according to the invention.

The inventors have developed a pulverulent dry mixture based on hydraulic binders, to be used as a powder component in combination with a pasty component which is a wet render, a basecoat or a levelling compound. When the weather conditions on the jobsite are cold or humid so that the wet render does not dry quickly enough, the contractor can add the powder component in the pasty component and mix them before applying the mixture to the building substrate to be coated.

The specific formulation of the powder component makes it possible to dry and harden the render both quickly and within the full thickness of the coating, thus avoiding the drawbacks of the prior art.

It was observed that by using only one kind of hydraulic binder some drawbacks occurred, especially:
- by using Portland cement alone: efflorescence (especially of calcium hydroxyde), limited open time, stickiness of the wet render, alteration of colors both during and after drying,
- by using calcium aluminate cement alone: large amounts needed in order to really accelerate drying, stickiness, alteration of color and texture, reduced flexibility and adhesion.

By catching the water contained in the wet render and forming a mineral phase inside the polymeric coating, thus creating a "hybrid" render, the powder component makes it possible to speed up the drying and hardening of the coating in a homogeneous manner, thereby avoiding forming a skin on the surface. Thanks to the combined presence of Portland cement, calcium aluminate cement and a source of sulfate, the mineral phase does not create any efflorescence, does not reduce the long-term stability of the color appearance of the render, does not cause any solubility issues, and creates a stable and durable render.

More specifically, the specific composition of the powder component makes it possible to form a durable ettringite phase (a hydrous calcium aluminum sulfate mineral), which contributes to the drying process and to the durability of the final render. The formation of ettringite crystals consumes water within the coating, leading to a quick film forming process of the organic binding phase. In addition, it creates a second binding phase which supports the main organic binding phase, thus providing additional durability and mechanical resistance. Finally, the formation of ettringite consumes the dissolved minerals which could later on cause efflorescence and blushing.

### Powder component

The powder component is a pulverulent dry mixture based on hydraulic binders.

The total amount of Portland cement, calcium aluminate cement and the source of sulfate in the powder component of the kit or in the pulverulent dry mixture is preferably 90wt% or more, especially 95wt% or more.

Preferably, the powder component comprises 1 to 15wt%, especially 3 to 10wt%, of Portland cement, 30 to 85wt%, especially 45 to 80wt%, of calcium aluminate cement and 5 to 40wt%, especially 10 to 30wt%, of a source of sulfate.

The term "Portland cement" means a cement of the CEM I or CEM II type, as defined in EN 197-1. A CEM I cement comprises at least 95wt% of clinker, while a CEM II cement comprises at least 65wt% of clinker and at most 35wt% of at least one of blast-furnace slag, silica fume, pozzolana, fly ash, burnt shale and limestone. A CEM II Portland cement is preferred because of its lower carbon footprint.

The source of sulfate is preferably a calcium sulfate source, in particular selected from gypsum, hemihydrate, anhydrite and any mixture of these compounds.

The powder component may also contain one or more additives selected from retarders, accelerators, plasticizers, defoaming agents, extenders and anticaking agents. Retarders and accelerators make it possible to control the hydraulic reaction, and may be selected from salts of lithium, salts of calcium, salts of sodium, acids, phosphates and sulfates. The total amount of additives is preferably between 0.1 and 6wt%, especially between 0.4 and 4wt%.

### Pasty component

The aqueous polymeric dispersion preferably comprises at least a polymer based on one or more monomers selected from the group including vinyl esters (especially vinyl esters of unbranched or branched alkylcarboxylic acids having from 1 to 15 carbon atoms), methacrylates and acrylates (especially (meth)acrylates of alcohols having from 1 to 10 carbon atoms), methacrylic acid, acrylic acid, vinyl aromatics, olefins, dienes and vinyl halides.

The vinyl esters are preferably vinyl acetate, vinyl propionate, vinyl butyrate, vinyl 2-ethylhexanoate, vinyl laurate, 1-methylvinyl acetate, vinyl pivalate and vinyl esters of alpha-branched monocarboxylic acids having from 5 to 11 carbon atoms. Preferred methacrylates or acrylates are methyl acrylate, methyl methacrylate, ethyl acrylate, ethyl methacrylate, propyl acrylate, propyl methacrylate, n-butyl acrylate, n-butyl methacrylate and 2-ethylhexyl acrylate. Vinyl aromatics are preferably styrene, methylstyrene and vinyltoluene. The preferred vinyl halide is vinyl chloride. The preferred olefins are ethylene and propylene, and the preferred dienes are 1,3-butadiene and isoprene.

Particularly preferred polymers are copolymers of at least two of the abovementioned monomers, especially vinyl acetate-ethylene copolymers, vinyl ester-ethylene-vinyl chloride copolymers ,vinyl acetate copolymers, vinyl acetate-acrylate copolymers, copolymers of methyl methacrylate with n-butyl acrylate and/or 2-ethylhexyl acrylate, copolymers of methyl methacrylate with 1,3-butadiene, vinyl chloride-ethylene copolymers, vinyl chloride-acrylate copolymers, styrene-butadiene copolymers, styrene-acrylate copolymers, vinyl acetate-(meth)acrylic acid-ethylene terpolymers.

Because the powder component may comprise high amounts of highly alkaline binders, the polymer is preferably protected against saponification. The polymer dispersion is also preferably stabilized in order to avoid any coagulation in a strong electrolytic environment.

Styrene-butadiene copolymers as well as styrene-acrylate copolymers have proven very stable in that respect.

The mineral aggregates preferably comprise siliceous aggregates and/or carbonaceous aggregates.

Mineral aggregates are, for example, silica sand, ground limestone, chalk, marble, clay, marl, aluminum oxide, talc and/or barite, with preference being given to siliceous sands, siliceous flours, carbonates in the form of ground limestone, crushed limestone sands, chalk, dolomite, magnesite and mixtures thereof. The mineral aggregates can also be present as lightweight fillers such as hollow microspheres composed of glass, e.g. expanded glass, and as aluminosilicates such as pearlites and expanded clay. Lightweight fillers based on natural materials, for example mineral foam, pumice, foaming lava and/or expanded vermiculite, may also be used. According to the desired texture, the size of aggregates may vary from 0.1 to 8.0 mm, especially from 0.1 to 0.7 mm for fine textures, from 0.7 to 2.0 mm for medium textures, and from 2.0 to 8.0 mm for coarse textures. The mineral aggregates may also comprise fillers having a size from 0.05 to 0.10 mm, in order to reduce the building of cracks, pores and pinholes during drying.

The pasty component may also comprise organic fillers, for example shredded plastic waste, such as plastic waste composed of polyvinyl chloride, polystyrene, polyethylene, polypropylene or melamine resins. Rubber particles and/or polystyrene spheres may also be used.

The pasty component mays also comprise at least one additive selected from pigments, fibers, thickeners, defoamers and preservatives.

Fibers may be introduced in order to reinforce the bulk of the render or to provide better workability or anti-sagging properties. Fibers are for example selected from synthetic polymeric fibers and fibers coming from renewable resources such as cellulose fibers or wood fibers. Thickeners can be added in order to improve workability, to control the settling of the fillers, or to impart anti-sagging properties. They may be inorganic, such as modified bentonite or montmorillonite, or organic, for example based on acrylates or polyurethanes.

The pasty component preferably comprises 40-80wt% of mineral aggregates, 10-40wt% of water and 4-25wt% of polymers.

The ratio between the powder component and the pasty component (i.e. the weight amount of powder component divided by the weight amount of pasty component) within the kit is to be adjusted according to the expected drying speed or the drying conditions at the jobsite. The weight ratio is typically from 0.5/100 to 7/100, preferably from 2/100 to 5/100.

The kit of the invention generally consists of the powder component and the pasty component. It is then a two-component kit.

Both components are generally physically separated in order to avoid any premature reaction between the hydraulic binders of the powder component and the water contained in the pasty component. The kit may for example comprise two separate containers or packages, each of them containing one of the components. The kit may also comprise one container with two separate compartments, each of them containing one of the components. In a preferred embodiment, the container or package of the powder component is water-soluble, for example made of polyvinyl alcohol. As an example, the pasty component can be packaged in a pail and the powder component in a water-soluble package so that the package can be just thrown into the pail before stirring.

Another object of the invention is a method to coat a building substrate comprising mixing the powder component and the pasty component of the kit according to the invention, and applying the obtained mixture on the surface of said building substrate.

The mixture may for example be applied with a trowel or sprayed with a machine. The thickness of the render is preferably between 1 to 8 mm, depending on the substrate's roughness, on the size of aggregates and on the number of application steps.

The building substrate is for example part of an External Thermal Insulation Composite System (ETICS).

Another object of the invention is therefore an External Thermal Insulation Composite System (ETICS) comprising a render obtained by the abovementioned method.

ETICS are also called EIFS, for Exterior Insulation Finishing Systems.

The ETICs preferably comprises, in sequence from a masonry wall, optionally a primer, an insulation panel fixed to the wall, a reinforcing layer, and, as a final layer, a render obtained by the method of the invention.

The insulation panel is for example a polymeric panel, a mineral wool panel or a chipboard panel. Polymeric panels include expanded or extruded polystyrene, polyurethane, phenolic or polyisocyanurate. The insulation panel is preferably glued with an adhesive mortar to the wall. It may also be mechanically fastened to the wall.

The reinforcing layer increases the impact resistance of the insulation panel, and is preferably a mesh (for example a fiberglass mesh) embedded in a basecoat. The render may for example be applied directly on the basecoat, or on a primer.

Due to the presence of the insulation panel, the reinforcing layer and the render may experience condensation while the render should dry, which dramatically extends the drying time and may in addition cause the render to wash out in case of rain and create running-off streaks on the render's surface. The invention is therefore especially adapted for ETICS, where the wet render has to dry safe, particularly under critical climates.

The following examples illustrate the invention in a non-limiting manner.

### Example 1

The drying speed of several wet renders has been investigated using the following methodology.

In order to simulate the drying in humid conditions, the wet renders have been applied on wood fiber boards and then covered with a plastic wrap and taped in order to build a closed space with 100% relative humidity over a long period of time.

After 1 hour, 3 hours, 18 hours and 3 days, the following properties have been qualitatively evaluated and ranked from 1 (excellent) to 6 (very bad):
- APP: appearance of the surface,
- SO: solidification of the bulk (using a tool to move the surface),
- WR: resistance against sprayed water (20 seconds of spraying and observation of the colour of the rinsing water),
- SOL: re-solubility of the surface (by mechanically rubbing-out the aggregates and pigments in presence of water).

The tested wet renders are:
- 1-1 (comparative): a wet render comprising 11wt% of a 50% dispersion of a terpolymer of ethylene, vinyl acetate and methacrylic acid, 22wt% of calcium carbonate filler, 48wt% of marble aggregates, 12wt% of water, and additives (dispersing agent, thickeners, fibers, hydrophobic agent, defoamer, preservatives etc...).
- 1-2 (comparative): a render according to DE 198 52 874 based on an acrylate aqueous dispersion mixed with an aqueous solution of zinc ammonium acetate.
- 1-3 (according to the invention): a mixture of the wet render 1-1 with a powder component comprising 7wt% OPC (CEM I 52.5 R), 70wt% CAC, 20wt% gypsum, as well as an accelerator (lithium carbonate) and a retarder (tartaric acid), the weight ratio between the powder component and the wet render being 4/100.

The results are shown in Table 1.

**Table 1**

| | | 1h | 3h | 18h | 3d |
|---|---|---|---|---|---|
| 1-1 | APP | very glossy | glossy | glossy | glossy |
| | SO | 6 | 6 | 6 | 6 |
| | WR | 6 | 6 | 6 | 6 |
| | SOL | 6 | 6 | 6 | 6 |

| 1-2 | APP | glossy | matt | matt | matt |
|---|---|---|---|---|---|
| | SO | 6 | 5 | 5 | 3 |
| | WR | 6 | 3 | 2 | 2 |
| | SOL | 6 | 5 | 5 | 4 |

| 1-3 | APP | semi-matt | matt | matt | matt |
|---|---|---|---|---|---|
| | SO | 6 | 2 | 1 | 1 |
| | WR | 3 | 2 | 1 | 1 |
| | SOL | 3 | 3 | 1 | 1 |

### Example 2

The drying speed of the same wet renders has been investigated in real conditions, in an ETICS.

EPS boards (100 mm thick) were covered with a cementitious basecoat having a reinforcing mesh embedded within, and then with a primer. The wet renders were then dried at 12°C under 85% of relative humidity.

The wet render 1-1 could not dry over a long period of time. The wet render 1-2 quickly formed a skin on the surface that retarded the drying of the bulk, which stayed wet. The wet render 1-3 in contrast quickly dried in its bulk.

## Claims

1. A kit for preparing a render composition able to be coated on a building substrate, especially a building substrate which is part of an External Thermal Insulation Composite System, said kit comprising:
- a powder component comprising Portland cement, calcium aluminate cement and a source of sulfate, and
- a pasty component comprising an aqueous polymeric dispersion and mineral aggregates.

2. The kit of Claim 1, wherein the total amount of Portland cement, calcium aluminate cement and the source of gypsum in the powder component is 90wt% or more, especially 95wt% or more.

3. The kit of Claim 1 or Claim 2, wherein the powder component comprises 1 to 15wt%, of Portland cement, 30 to 85wt% of calcium aluminate cement and 5 to 40wt% of a source of sulfate.

4. The kit of Claim 3, wherein the powder component comprises 3 to 10wt% of Portland cement, 45 to 80wt% of calcium aluminate cement and 10 to 30wt% of a source of sulfate.

5. The kit of any of Claims 1 to 4, wherein the aqueous polymeric dispersion comprises at least a polymer based on one or more monomers selected from the group including vinyl esters, methacrylates, acrylates, methacrylic acid, acrylic acid, vinyl aromatics, olefins, dienes and vinyl halides.

6. The kit of any of Claims 1 to 5, wherein the mineral aggregates comprise siliceous aggregates and/or carbonaceous aggregates.

7. The kit of any of Claims 1 to 6, wherein the pasty component comprises 40-80wt% of mineral aggregates, 10-40wt% of water and 4-25wt% of polymers.

8. The kit of any of Claims 1 to 7, wherein the weight ratio between the powder component and the pasty component is from 0.5/100 to 7/100, preferably from 2/100 to 5/100.

9. A pulverulent dry mixture comprising Portland cement, calcium aluminate cement and a source of sulfate, in a total amount of 90wt% or more.

10. The pulverulent dry mixture according to Claim 9, containing one or more additives selected from retarders, accelerators, plasticizers, defoaming agents, extenders and anticaking agents.

11. Use of a pulverulent dry mixture comprising at least 90wt% of a mixture of hydraulic binders comprising Portland cement, calcium aluminate cement and a source of sulfate, to accelerate the hardening of a polymeric render.

12. A method to coat a building substrate comprising mixing the powder component and the pasty component of the kit according to any of Claims 1 to 8, and applying the obtained mixture on the surface of said building substrate.

13. The method according to Claim 12, wherein the building substrate is part of an External Thermal Insulation Composite System.

14. An External Thermal Insulation Composite System comprising a render obtained by the method according to Claim 13.

15. The External Thermal Insulation Composite System of Claim 14, comprising, in sequence from a masonry wall, an insulation panel fixed to the wall, a reinforcing layer, and, as a final layer, a render obtained by the method according to Claim 13.
